Europäisches Patentamt

(19) European Patent Office

Office européen des brevets

(11) Publication number: **0 147 950**
**A2**

(12) # EUROPEAN PATENT APPLICATION

(21) Application number: 84308225.6

(51) Int. Cl.⁴: **F 16 K 5/06**

(22) Date of filing: 27.11.84

(30) Priority: 15.12.83 US 561887

(43) Date of publication of application:
10.07.85 Bulletin 85/28

(84) Designated Contracting States:
DE FR GB IT LU NL SE

(71) Applicant: SMITH VALVE CORPORATION
125 Fisher Street P.O. Box 1000
Westboro Massachusetts 01581(US)

(72) Inventor: Harding, Bruce L.
33 Anthony Drive Holden
Massachusets 01521(US)

(74) Representative: Pratt, David Martin et al,
Brookes & Martin High Holborn House 52/54 High
Holborn
London. WC1V 6SE(GB)

(54) Ball valve.

(57) A ball valve has a valve body (10) with a bonnet bore (12) communicating with a fluid through bore (14). A valve seat (16) in the valve body (10) surrounds the fluid bore axis. A bonnet (20), with a stem bore 22 extending therethrough, is received in the bonnet bore (12). An operating stem (28) is journalled for rotation in the stem bore (22). A ball (30) is connected to the operating stem (28), and located in the fluid bore (14). The ball (30) has a through passageway (32). Rotation of the operating stem (28) causes the ball (30) to rotate eccentrically between an open position, in which the ball is spaced from the valve seat (16) with its through passageway (32) aligned with the fluid bore (14), and a closed position, in which the ball blocks the fluid bore by being wedged into sealing engagement with the valve seat. The ball (30) is externally contoured to provide both a clearance from the valve body (10) to accommodate its eccentric rotation, and a stop (54) which is engageable with the valve body to positively locate the ball in its open position. The ball valve can be assembled in combination with an actuator (64) having a linearly reciprocating piston (80) mechanically connected to the operating stem (28) by means of a rack (82) and a pinion (86). Linear motion of the piston (80) is limited in one direction by the sealing engagement of the ball (30) with the valve seat (16), and in the opposite direction by the engagement of the ball stop (54) with the valve body (10).

./...

Croydon Printing Company Ltd

FIG.1

FIG.2

# BALL VALVE

This invention relates to a ball valve of the type commonly referred to as a top-entry, metal-seated ball valve, and to the combination of a ball valve with an actuator specially adapted for use therewith.

There exists a long-felt, and heretofore unsatisfied, need for a quick-acting, low-cost, on-off valve having the capability of achieving ANSI (American National Standard Institute) pressure-temperature ratings. Conventional gate valves, with their metal-to-metal seating and wedging action, satisfy many of these requirements. However, because a screw thread is used to force the wedging action, many turns of the operating handle are required to move the wedge between its fully open and fully closed positions. Thus, quick action becomes an impossibility with valves of this type.

Moderately-priced quarter turn ball valves also achieve many of the above-stated requirements. However, such valves lack the ability to achieve high pressure-temperature ratings, because they employ resilient elastomeric seats, whose pressure retaining capabilities drop rapidly as temperatures increase.

Metal-seated ball valves also are available which again achieve many, but not all, of the above-stated requirements. Because such valves require extremely precise machining and assembly, their costs are extremely high, and this in turn severely limits where they can be used.

The main aim of the invention is to provide a new and improved top-entry, metal-seated ball valve which is quick-acting, low-cost, and capable of achieving ANSI pressure-temperature ratings.

Another aim of the invention is the provision of means for adjusting the relative positions of certain valve components, during their initial assembly, in order to compensate for normal variations in manufacturing tolerances and thereby ensure that, when closed, the valve ball is properly wedged into sealing engagement with the valve seat.

The present invention provides a ball valve comprising a valve body having a bonnet bore communicating with a fluid through bore, a valve seat in the valve body surrounding the fluid bore axis, a ball with a passageway extending therethrough, the ball being located in the fluid bore and being integrally connected to an operating stem, a bonnet received in the bonnet bore, the bonnet having a stem bore in which the operating stem is journalled for rotation between a closed position in which the ball is spaced from the valve body and in sealing engagement with the valve seat to block the fluid bore, and an open position in which the ball is spaced from the valve seat and in engagement with the valve body, with said passageway aligned with the fluid bore.

Advantageously, the operating stem is journalled for rotation through a quarter turn between said closed and open positions.

Preferably, the ball is connected to the operating stem in such a manner that rotation of the operating stem causes the ball to rotate eccentrically between said closed and open positions. In order to achieve eccentric rotation, the axis of the operating stem may be offset with respect to both the centre of the ball and the centre line of the valve seat.

The ball may be externally contoured to provide a clearance from the valve body to accommodate said eccentric rotation, and to provide a stop on the ball which is engageable with the valve body to locate the ball positively in said open position. This latter feature, in combination with the sealing engagement of the ball with the valve seat in the closed position, makes it possible to combine the valve with an improved low-cost actuator.

Advantageously, the axis of the stem bore is offset from the axis of the bonnet bore. Conveniently, during initial assembly of the valve components, the bonnet and the operating stem are relatively rotatable in order to achieve a desired seating of the ball against the valve seat, and means are provided for fixing the bonnet relative to the valve body when said seating has been achieved. Thus, during assembly of the valve components, normal variations in manufacturing tolerances can be easily and inexpensively compensated for by rotatably adjusting the bonnet and/or the operating stem in relation to each other in order to achieve a precise seating of the ball against the valve seat.

Preferably, the rotational axis of the operating stem is farther from the valve seat than the axis of the bonnet bore.

The valve seat may be a circular metal valve seat, and the ball made by made of metal and be integrally connected to the operating stem.

The invention further provides a ball valve and an actuator, the ball valve being as defined above, and the actuator being operatively associated with the operating stem, the actuator comprising a housing defining a gear chamber, a cylinder having one end in communication with the gear chamber via a connecting opening therein, a piston arranged within the cylinder for linear reciprocating movement along the cylinder axis, an output shaft mounted within the housing for rotation about an axis extending transversely with respect to the cylinder axis, the output shaft having an end protruding from the housing for connection to the operating stem, a pinion mounted on the output shaft for rotation therewith within the gear chamber, a rack carried by the piston so as to protrude from the piston through the connecting opening into the gear chamber, the rack being in meshed engagement with the pinion, and operating means for linearly reciprocating the piston along the cylinder axis, whereby the meshed engagement of the rack with the pinion will convert the linear reciprocating motion of the piston into rotary motion imparted to the output shaft and the operating stem connected thereto, with the linear motion of the piston being limited in one direction by the sealing engagement of the ball with the valve seat, and in the opposite direction by the engagement of the ball with the valve body.

The invention will now be described in greater detail, by way of example, with reference to the accompanying drawings, in which:-

Fig. 1 is an isometric cross-sectional view of a ball valve constructed in accordance with the invention, with the ball in the open position;

Fig. 2 is a vertical cross-sectional view of the ball valve of Fig. 1, on an enlarged scale, showing the ball in the closed position;

Figs. 3 and 4 are cross-sectional views taken respectively on the lines 3-3 and 4-4 of Fig. 2;

Figs. 5A, 5B and 5C are cross-sectional views taken on the line 5-5 of Fig. 2, and respectively showing the ball in a misaligned and thus improperly closed position, a properly-seated closed position, and a fully open position;

Fig. 6 is a partial sectional view showing the ball valve of Fig. 1 assembled with a specially-adapted, double-acting, pneumatic actuator; and

Fig. 7 is a cross-section taken on the line 7-7 of Fig. 6.

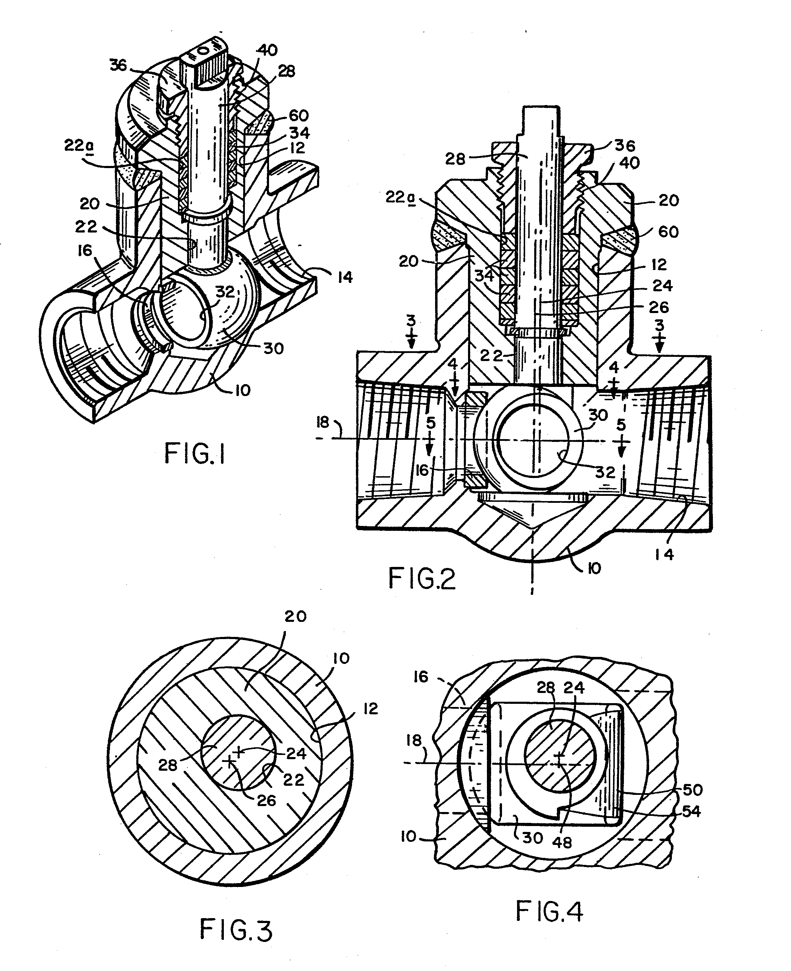

Referring to the drawings, Fig. 1 shows a ball valve having a unitary body 10 having a bonnet bore 12 communicating with a fluid through bore 14. A circular metal valve seat 16 is arranged in the valve body 10 at a location adjacent to the junction of the bonnet bore 12 with the fluid bore 14. The valve seat 16 surrounds the fluid bore axis, and the centre line 18 of the valve seat is generally coincident with the fluid bore axis.

A bonnet 20 is received in the bonnet bore 12. The bonnet 20 has a stem bore 22 extending therethrough, with the axis 24 of the stem bore being offset from the axis 26 of the bonnet bore 12 (see Fig. 3).

An operating stem 28 is rotatably journalled in the stem bore 22. The rotational axis of the operating stem 28 is coincident with the stem bore axis, and hence both will be designated in the drawings by the same reference numeral 24. The operating stem 28 is integrally joined, at its lower end, to a ball 30 located in the fluid bore 14. The ball 30 has a passageway 32 extending therethrough. The stem bore 22 has an enlarged diameter portion 22a containing annular packing elements 34. The packing elements 34 are compacted by a packing gland 36 threaded, at 40, into the upper end of the bonnet 20. A handwheel or the like (not shown) may be connected to the upper end of the operating stem 28.

As can be best seen in Fig. 4, because of the offset of the ball centre 48 from the stem axis 24, the ball 30 will rotate eccentrically with respect to the axis 24. To accommodate this offset rotation, the surface of the ball 30 is contoured, at 50, to avoid interference with interior surfaces of the valve body 10. The contour 50 also defines a stop 54.

When the valve is open, as shown in Figs. 1 and 5C, the ball 30 is spaced from the valve seat 16, with its through passageway 32 aligned with the fluid bore 14, and with the stop 54 engaging the valve body at 56. The valve is closed by rotating the operating stem 28 through a quarter turn to rotate the ball 30 eccentrically to the position best shown in Figs. 2, 4 and 5B. The stop 54 is now spaced from the valve body 10, and the ball 30 is wedged into sealing engagement with the valve seat 16 to block the fluid bore 14.

Thus, it will be seen that the valve can be rapidly operated between its fully closed and fully open positions, by rotating the operating stem 28 in the opposite directions through a quarter turn. The ball 30 is positively located in the closed position by its wedged engagement with the valve seat 16, and in the open postion by the engagement of the stop 54 with the valve body 10 at 56.

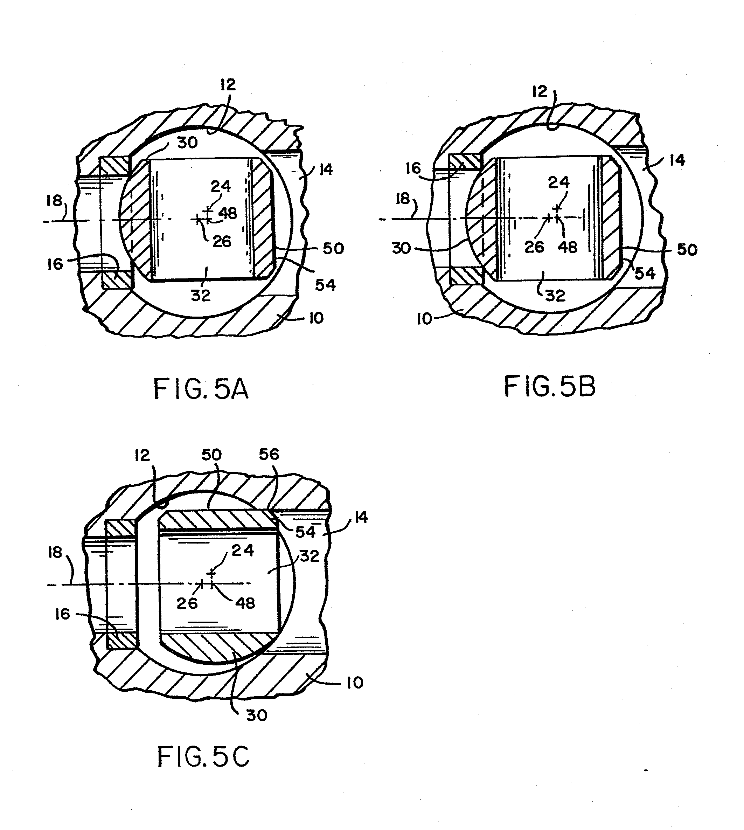

Because of variations arising from manufacturing tolerances, a situation might arise where the ball 30 would fail to seat properly against the valve seat 16 in the closed position. One such situation is shown in Fig. 5A, with the misalignment of the ball 30 in relation to the valve seat 16 being exaggerated for illustrative purposes. During initial assembly of the valve components, this misaligned condition can be corrected by rotating the bonnet 20 in the bonnet bore 12 and/or the operating stem 28 in the stem bore 22. By thus taking advantage of the dual offset relationships between the ball centre 48 and stem axis 24, and between the stem axis 24 and the bonnet bore axis 26, the ball 30 can be precisely seated against the metal valve seat 16, as shown in Fig. 5B. Once this has been accomplished, the bonnet 20 is fixed relative to the valve body 10, for example by welds 60. Thus, minor tolerance variations of valve components can be readily accommodated during initial assembly.

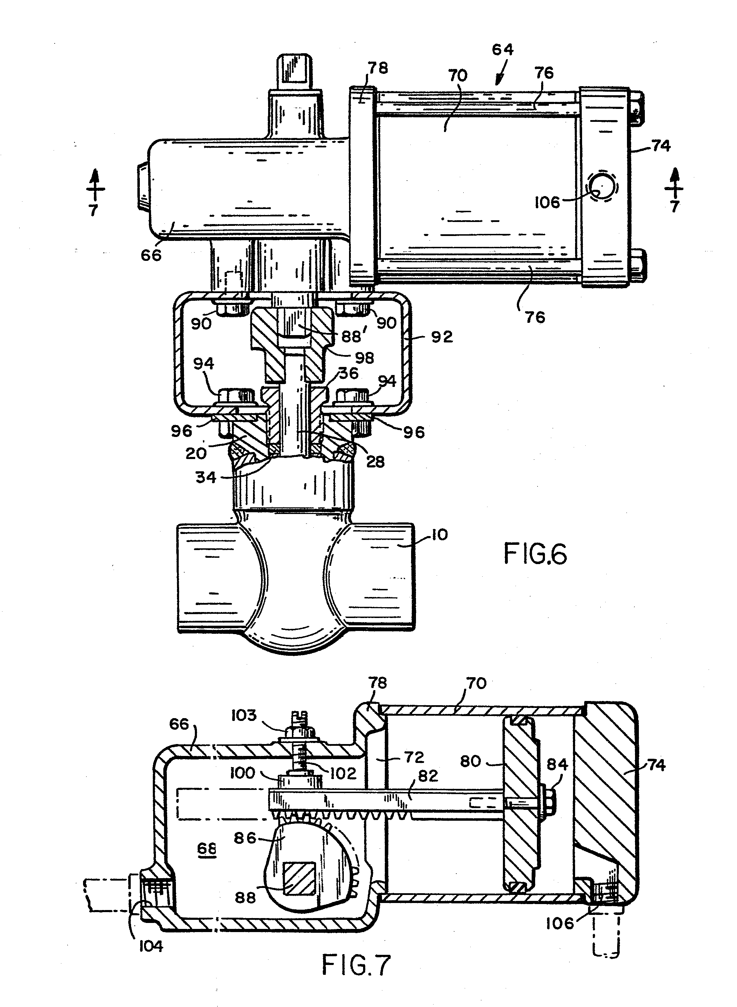

Referring now to Figs. 6 and 7, the above-described ball valve is shown assembled to a double-acting, pneumatic actuator 64 specially designed for use in conjunction therewith. The actuator 64 includes a housing 66 and a cylinder 70. The housing 66 defines a gear chamber 68; and the cylinder 70 communicates, at one end, with the gear chamber via an opening 72 in the housing. The opposite end of the cylinder 70 is closed by an end cap 74. Tie rods 76 extend through the end cap 74 and are threaded into holes in a shoulder 78 on the housing 66, thereby fixing the cylinder 70 and the end cap to the housing.

A piston 80 is arranged in the cylinder 70 for reciprocating movement along the cylinder axis. A rack 82 is secured to the piston 80 by a cap screw 84. The rack 82 meshes with a pinion 86 carried on an output shaft 88. The output shaft 88 is rotatable about an axis extending transversely with respect to the cylinder axis, and has a flat-sided end 88' protruding externally from the housing 66.

The housing 66 is bolted, at 90, to the top of a bracket 92; the bottom of the bracket in turn being bolted, at 94, to a plate 96 on the valve bonnet 20. The shaft end 88' protrudes downwardly through an opening in the top of the bracket 92, where it is mechanically connected to the flat-sided upper end of the operating stem 28 by an intermediate connecting element 98 extending therebetween.

As is best shown in Fig. 7, the rack 82 is pressed into engagement with the pinion 86 by a pressure pad 100 adjustably mounted on the end of a support shaft 102 threaded through the upper wall of the housing 66. The shaft 102 is releasably fixed against rotation by a jam nut 103.

Compressed air ports 104 and 106 are located respectively in the housing 66 and the end cap 74. By appropriately controlling the admission and exhaust of compressed air through the ports 104 and 106, the piston 80 and the rack 82 can be reciprocated to rotate the pinion 86 and the output shaft 88. This rotation will be transmitted, via the connecting element 98, to the operating stem 28 to operate the valve between its open and closed positions. The valve is, in effect, self locating in the open position by virtue of the ball stop 54 engaging the valve body 10 at 56 (see Fig. 5C), as well as in the closed position by virtue of the ball 30 being wedged against the valve seat 16 (see Figs. 2 and 5B). Thus, there is no need to incorporate adjustable stops in the actuator 64 to limit the extent to which the piston 80 and the rack 82 can be reciprocated. This reduces costs, and simplifies the assembly and operational coordination of the valve actuator.

CLAIMS

1.   A ball valve comprising a valve body (10) having a bonnet bore (12) communicating with a fluid through bore (14), a valve seat (16) in the valve body (10) surrounding the fluid bore axis, a ball (30) with a passageway (32) extending therethrough, the ball being located in the fluid bore (14) and being integrally connected to an operating stem (28), a bonnet (20) received in the bonnet bore (12), the bonnet (20) having a stem bore (22) in which the operating stem (28) is journalled for rotation between a closed position in which the ball (30) is spaced from the valve body (10) and in sealing engagement with the valve seat (16) to block the fluid bore (14), and an open position in which the ball (30) is spaced from the valve seat (16) and in engagement with the valve body (10), with said passageway (32) aligned with the fluid bore (14).

2.   A ball valve as claimed in claim 1, wherein the operating stem (28) is journalled for rotation through a quarter turn between said closed and open positions.

3.   A ball valve as claimed in claim 1 or claim 2, wherein the ball (30) is connected to the operating stem (28) in such a manner that rotation of the operating stem (28) causes the ball (30) to rotate eccentrically between said closed and open positions.

4.   A ball valve as claimed in claim 3, wherein the ball (30) is externally contoured to provide a clearance from the valve body (10) to accommodate said eccentric rotation, and to provide a stop (54) on the ball (30) which is engageable with the valve body (10) to locate the ball (30) positively in said open position.

5.   A ball valve as claimed in claim 3 or claim 4, wherein the rotational axis of the operating stem (28) is offset with respect to both the centre (48) of the ball (30) and the centre line (18) of the valve seat (16).

6.   A ball valve as claimed in claim 5, wherein the axis (24) of the stem bore (22) is offset from the axis (26) of the bonnet bore (12).

7.    A ball valve as claimed in claim 6, wherein, during initial assembly of the valve components, the bonnet (20) and the operating stem (28) are relatively rotatable in order to achieve a desired seating of the ball (30) against the valve seat (16), and wherein means are provided for fixing the bonnet (20) relative to the valve body (10) when said seating has been achieved.

8.    A ball valve as claimed in claim 6 or claim 7, wherein the rotational axis (24) of the operating stem (28) is farther from the valve seat (16) than the axis (26) of the bonnet bore (12).

9.    A ball valve as claimed in any one of claims 1 to 9, wherein the valve seat (16) is a circular metal valve seat, and the ball (30) is made of metal and integrally connected to the operating stem (28).

10.    A ball valve and actuator assembly comprising a ball valve and an actuator, the ball valve being as claimed in any one of claims 1 to 9, and the actuator (64) being operatively associated with the operating stem (28), the actuator comprising a housing (66) defining a gear chamber (68), a cylinder (70) having one end in communication with the gear chamber (68) via a connecting opening (72) therein, a piston (80) arranged within the cylinder (70) for linear reciprocating movement along the cylinder axis, an output shaft (88) mounted within the housing (66) for rotation about an axis extending transversely with respect to the cylinder axis, the output shaft (88) having an end (88') protruding from the housing (66) for connection to the operating stem (28), a pinion (86) mounted on the output shaft (88) for rotation therewith within the gear chamber (68), a rack (82) carried by the piston (80) so as to protrude from the piston (80) through the connecting opening (72) into the gear chamber (68), the rack (82) being in meshed engagement with the pinion (86), and operating means for linearly reciprocating the piston (80) along the cylinder axis, whereby the meshed engagement of the rack (82) with the pinion (86) will convert the linear reciprocating motion of the piston (80) into rotary motion imparted to the output shaft (88) and the operating stem (28) connected thereto, with the linear motion of the piston (80) being limited in one direction by the sealing engagement of the ball (30) with the valve seat (16), and in the opposite direction by the engagement of the ball (30) with the valve body (10).

FIG.1

FIG.2

FIG.3

FIG.4

2/3

0147950

FIG.5A

FIG.5B

FIG.5C

FIG.6

FIG.7